# EUROPEAN PATENT APPLICATION

(11) **EP 4 442 754 A1**
(43) Date of publication of application: **09.10.2024**
(21) Application number: 22901425.3
(22) Date of filing: 01.12.2022
(51) Int. Cl.: C08L 23/16, C08K 3/06, C08K 5/14, C08L 9/00, C09K 3/00, F16F 1/36

(54) **ANTI-VIBRATION RUBBER COMPOSITION, ANTI-VIBRATION MOUNT, AND ANTI-VIBRATION GROMMET**

(30) Priority: 02.12.2021 JP 2021195968
(71) Applicant: NOK Corporation, Minato-ku Tokyo 105-8585 (JP)
(72) Inventor: ISOGAI, Tomonori, Saihaku-gun, Tottori 683-0362 (JP)
(74) Representative: TBK
(86) International application number: PCT/JP2022/044477
(87) International publication number: WO 2023/100995

(57) **Abstract**

The present invention relates to an anti-vibration rubber composition in which the ratio of the storage elastic modulus E' at -30°C to the storage elastic modulus E' at 90°C after crosslinking (-30°C/90°C) is 6.4 or less, as measured with reference to JIS K6394: 2007.

## Description

### Technical Field

The present invention relates to an anti-vibration rubber composition, an anti-vibration mount, and an anti-vibration grommet.

### Background Art

Conventionally, anti-vibration rubber products such as anti-vibration mounts and anti-vibration grommets have been used in a wide range of fields such as automobiles, electronic products, and general industrial machinery. Particularly in the automotive field, these products are widely used for mechanical parts such as anti-block brake system (ABS) of brake control unit, regenerative cooperative brake (Electronically Controlled Brake System: ECB), anti-slip device (Electronic Stability Control: ESC), engine auxiliary equipment, and fuel cell vehicle piping.

For the rubber members used in such anti-vibration rubber products, there are commonly used rubber materials such as ethylene-propylene-diene terpolymer (EPDM), styrene-butadiene rubber (SBR), butyl rubber (IIR), and various rubber compositions have been conventionally investigated in order to improve their performance as anti-vibration rubbers.

For example, Patent Literature 1 discloses that silicone oil is blended into an anti-vibration rubber composition containing butyl rubber as a main component to improve processability and moldability while enhancing the damping properties of butyl rubber. Patent Literature 2 discloses that carbon black and a polyolefin oligomer are blended into a torsional damper rubber composition containing EPDM as a main component to improve conductivity and durability while increasing the damping properties of EPDM. Patent Literature 3 discloses that a styrene-based or styrene-acrylic resin is blended into an anti-vibration rubber composition containing SBR as a main component to improve tan δ at high temperatures.

However, in recent years, there has been a demand for the development of vibration isolating members that are used in anti-vibration rubber products such as anti-vibration mounts and anti-vibration grommets, and which have even higher performance than conventional ones. Therefore, it is necessary to improve the properties of anti-vibration rubber compositions as well, and in the future, it is desired to provide an anti-vibration rubber composition that can sufficiently exhibit the anti-vibration effect even at various environmental temperatures.

### Document List

### Patent Literatures

Patent Literature 1: Japanese Patent Application Publication No. 5-059235
Patent Literature 2: International Publication No. 2021/006018
Patent Literature 3: Japanese Patent Application Publication No. 2017-165815

### Summary of Invention

### Technical Problem

It is an object of the present invention to provide an anti-vibration rubber composition, an anti-vibration mount, and an anti-vibration grommet that exhibit good vibration properties at various environmental temperatures after crosslinking.

### Solution to Problem

The anti-vibration rubber composition according to the embodiment of the present invention has a ratio of the storage elastic modulus E' at -30°C to the storage elastic modulus E' at 90°C after crosslinking (-30°C/90°C), of 6.4 or less, as measured with reference to JIS K6394: 2007.

The anti-vibration mount according to the embodiment of the present invention is obtained by vulcanization molding the anti-vibration rubber composition.

The anti-vibration grommet according to the embodiment of the present invention is obtained by vulcanization molding the anti-vibration rubber composition.

### Effects of Invention

According to the present invention, it is possible to provide an anti-vibration rubber composition, an anti-vibration mount, and an anti-vibration grommet that exhibit good vibration properties at various environmental temperatures after crosslinking.

### Description of Embodiments

Embodiments of the present invention will be described below. The anti-vibration rubber composition according to the present embodiment has temperature dependence of E', that is, a ratio of the storage elastic modulus E' at -30°C to the storage elastic modulus E' at 90°C after crosslinking (-30°C/90°C), of 6.4 or less, as measured with reference to JIS K6394: 2007. In addition, as a rubber component in an anti-vibration rubber composition, ethylene-propylene-diene terpolymer (hereinafter also referred to as "EPDM") and butadiene rubber (hereinafter also referred to as "BR") are contained, and EPDM and BR are blended such that the specified amount of EPDM and BR is 100% by weight in total. Blending EPDM and BR within a predetermined content range can provide an anti-vibration rubber composition that exhibits good temperature dependence of E' after crosslinking. Further, the anti-vibration rubber composition after crosslinking has good temperature dependence of E', and thus vulcanized products of such anti-vibration rubber compositions, such as anti-vibration rubber products including anti-vibration mounts and anti-vibration grommets, also exhibit good temperature dependence of E'. Hereinafter, each component constituting the anti-vibration rubber composition (hereinafter also simply referred to as "rubber composition") according to the present embodiment will be described in detail.

### <Rubber component>

In the present embodiment, the rubber composition contains both EPDM and BR as the rubber component (component (A)). The content of EPDM is 12% by weight or more and 98% by weight or less, and the content of BR is 2% by weight or more and 88% by weight or less, with respect to the total amount of EPDM and BR. That is, EPDM and BR are blended as rubber components such that the total amount of EPDM and BR is 100% by weight. Thus, appropriately controlling the contents of EPDM and BR contained in the rubber composition causes EPDM and BR to interact specifically with each other when forming crosslinked rubber, allowing to prepare an anti-vibration rubber composition that exhibits good temperature dependence of E' after crosslinking.

The lower limit of the content of EPDM is preferably 18% by weight or more, more preferably 24% by weight or more, and the upper limit of the EPDM content is preferably 88% by weight or less, more preferably 80% by weight or less. In this case, correspondingly, for the content of BR, the lower limit of the content of BR is preferably 12% by weight or more, more preferably 20% by weight or more, and the upper limit of the BR content is preferably 82% by weight or less, more preferably 76% by weight or less. The content of EPDM contained in the rubber composition of 18% by weight or more and 88% by weight or less (the content of BR of 12% by weight or more and 82% by weight or less) can further improve temperature dependence of E', and the EPDM content of 24% by weight or more and 80% by weight or less (BR content of 20% by weight or more and 76% by weight or less) can provide an anti-vibration rubber composition that exhibits even better temperature dependence of E'.

As EPDM, an ethylene-propylene-diene copolymer obtained by copolymerizing ethylene and propylene with various diene components can be used. Examples of the diene component of EPDM include: linear nonconjugated dienes such as 1,4-hexadiene, 3-methyl-1,4-hexadiene, 4-methyl-1,4-hexadiene, 5-methyl-1,4-hexadiene, 4,5-dimethyl-1,4-hexadiene, and 7-methyl-1,6-octadiene; and cyclic nonconjugated dienes such as methyltetrahydroindene, 5-vinyl-2-norbornene, 5-ethylidene-2-norbornene, 5-methylene-2-norbornene, 5-isopropylidene-2-norbornene, 5-vinylidene-2-norbornene, 6-chloromethyl-5-isopropenyl-2-norbornene, and dicyclopentadiene. These diene components are not particularly limited, and from the viewpoint that high-speed crosslinking is possible in the crosslinking reaction, norbornene compounds are preferable, and 5-ethylidene-2-norbornene is particularly preferable. EPDM has excellent heat resistance, weather resistance, and compression set, and can exhibit sufficient anti-vibration effects as a rubber material even in high-temperature environments.

EPDM is not particularly limited as long as it is obtained by copolymerizing ethylene and propylene with various diene components. As EPDM, a copolymer prepared by synthesizing each monomer component may be used, and as a commercially available product, for example, "JSR EP27", "JSR EP123" manufactured by JSR Corporation, "KELTAN (registered trademark) 2660", "KELTAN (registered trademark) 6950C" manufactured by ARLANXEO, and "EPT (registered trademark) 3092M" manufactured by Mitsui Chemicals, Inc. may also be used. In addition, EPDM may be used singly or in combination of two or more.

The content of the diene component in EPDM is not particularly limited, and is preferably 1% by weight or more, more preferably 3% by weight or more with respect to the total weight of EPDM. In addition, the upper limit of the content of the diene component is preferably 15% by weight or less, more preferably 12% by weight or less. The diene component amount is preferably in the range of 1% by weight or more and 15% by weight or less, more preferably 3% by weight or more and 12% by weight or less, thereby exhibiting an appropriate vulcanization rate during molding, and vulcanization molding can provide a crosslinking density suitable for an anti-vibration member.

The Mooney viscosity ML₁₊₄ (125°C) of EPDM is not particularly limited, and is preferably 20 or more, more preferably 25 or more. In addition, the upper limit of the Mooney viscosity ML₁₊₄ (125°C) is preferably 80 or less, more preferably 70 or less. The EPDM may be oil-extended EPDM or non-oil-extended EPDM.

The content of propylene with respect to the total content (total weight) of ethylene and propylene in EPDM is not particularly limited, and is preferably 35% by weight or more, more preferably 40% by weight or more. In addition, the upper limit of the content of propylene is preferably 55% by weight or less. If propylene content is less than 35% by weight, a concern arises about deteriorating low temperature properties due to crystallization of ethylene chains. On the other hand, if the propylene content is more than 55% by weight, a concern arises about deteriorating the low temperature properties due to crystallization of propylene chains. If the low-temperature properties of EPDM deteriorate, a risk arises about deteriorating anti-vibration properties and compression set at low temperatures. In addition, a mixture of multiple types of EPDM may be used. In this case, even if some of the multiple types of EPDM used in a mixture do not satisfy the range of propylene content of 35% by weight or more and 55% by weight or less with respect to the total content (total weight) of ethylene and propylene, all of EPDM may satisfy this range. The content of propylene is calculated as follows. Propylene content = propylene amount / (ethylene amount + propylene amount) × 100

BR is a homopolymer of butadiene. Therefore, BR does not include styrene-butadiene rubber (SBR) copolymerized with styrene, nitrile-butadiene rubber (NBR) copolymerized with acrylonitrile, and hydrogenated nitrile rubber (HNBR) modified by hydrogenating NBR. BR has excellent cold resistance and can exhibit good temperature dependence of E' as a rubber material even in low-temperature environments.

The amount of cis-1,4 bonds in BR is preferably 90% by weight or more, more preferably 95% by weight or more. In addition, the glass transition temperature (Tg) of BR is preferably -90°C or less, more preferably -100°C or less. Appropriately controlling the amount of cis-1,4 bonds and the glass transition temperature (Tg) of BR can provide good temperature dependence of E' even in a low-temperature environments in a vulcanized anti-vibration member.

BR is not particularly limited, and a homopolymer prepared by synthesizing butadiene may be used, and as a commercially available product, for example, "UBEPOL BR (registered trademark) 150" manufactured by Ube Industries, Ltd., "BUDENE (registered trademark) 1223" manufactured by Goodyear Tire Rubber Company, "BR730" manufactured by JSR Corporation, and "NIPOL (trademark registered) 1220" manufactured by Nippon Zeon Corporation may also be used. In addition, BR may be used singly or in combination of two or more.

### <Carbon black>

The rubber composition according to the present embodiment may further contain carbon black (component (B)). The rubber composition contains carbon black, thereby providing stronger interaction between the carbon blacks or between the carbon black and the rubber component, allowing to increase the loss coefficient tan δ of the rubber composition after crosslinking, particularly the loss coefficient tan δ in a high temperature region and to produce an anti-vibration rubber composition that exhibits good anti-vibration properties after crosslinking.

Examples of carbon black include various grades of carbon black such as SAF-HS, SAF, ISAF-HS, ISAF, ISAF-LS, IISAF-HS, HAF-HS, HAF, HAF-LS, FEF, GPF, SRF, MCF, LFF, MFF, RCF, and Acetylene black. In addition, the carbon black used preferably has a DBP oil absorption of 60 cm³/100 g or more and 170 cm³/100 g or less, and an iodine adsorption amount of 20 mg/g or more and 260 mg/g. These carbon blacks may be used singly or in combination of two or more. Among these carbon blacks, HAF carbon black is preferable, and HAF-LS carbon black is more preferable.

Examples of commercially available carbon blacks include "REGAL (registered trademark) 300J" manufactured by Cabot Japan K. K., "Denka Black (registered trademark) granules" manufactured by Denka Company Limited, and "Toka Black (registered trademark) #8300" manufactured by Tokai Carbon Co., Ltd.

The content of carbon black is preferably 10 parts by weight or more, more preferably 20 parts by weight or more, still more preferably 50 parts by weight or more, and still furthermore preferably 100 parts by weight or more with respect to 100 parts by weight of rubber components. In addition, the upper limit of carbon black content is preferably 250 parts by weight or less, more preferably 200 parts by weight or less, still more preferably 180 parts by weight or less, and still furthermore preferably 150 parts by weight or less with respect to 100 parts by weight of rubber components. That is, when the rubber composition contains carbon black, the content of carbon black (component (B)) is preferably 10 parts by weight or more and 250 parts by weight or less with respect to 100 parts by weight of the rubber component (component (A)).

### <Plasticizer>

The rubber composition according to the present embodiment may further contain a plasticizer (component (C)). When the rubber composition contains a plasticizer, it is possible to reduce the hardness of an anti-vibration member obtained by vulcanization molding the rubber composition.

The plasticizer is preferably a poly α-olefin. Using poly α-olefin as a plasticizer can reduce the hardness of the rubber composition after crosslinking without inhibiting temperature dependence of E'. Examples of commercially available plasticizers include "DURASYN (registered trademark) 164", "DURASYN (registered trademark) 170", and "DURASYN (registered trademark) 174I" manufactured by INEOS Capital Limited. The plasticizer may be used singly, or may be used in combination of two or more.

The content of the plasticizer is preferably 10 parts by weight or more, more preferably 20 parts by weight or more, still more preferably 50 parts by weight or more, and still furthermore preferably 70 parts by weight or more with respect to 100 parts by weight of rubber components. In addition, the upper limit of the plasticizer content is preferably 200 parts by weight or less, more preferably 150 parts by weight or less, still more preferably 130 parts by weight or less, and still furthermore preferably 120 parts by weight or less with respect to 100 parts by weight of rubber components. That is, when the rubber composition contains a plasticizer, the content of the plasticizer (component (C)) is preferably 10 parts by weight or more and 200 parts by weight or less with respect to 100 parts by weight of the rubber component (component (A)).

As described above, the rubber composition may further contain at least one of carbon black (component (B)) and a plasticizer (component (C)), and may contain both carbon black (component (B)) and a plasticizer (component (C)). When the rubber composition contains the component (B) and the component (C), the content of component (A) is preferably 20% by weight or more and 80% by weight or less, more preferably 23% by weight or more and 60% by weight or less, and still more preferably 25% by weight or more and 45% by weight or less, with respect to the total amount of the component (A), the component (B), and the component (C). In addition, the content of the component (B) is preferably 10% by weight or more and 60% by weight or less, more preferably 15% by weight or more and 50% by weight or less, and still more preferably 25% by weight or more and 45% by weight or less. In addition, the content of the component (C) is preferably 10% by weight or more and 50% by weight or less, more preferably 15% by weight or more and 48% by weight or less, and still more preferably 25% by weight or more and 45% by weight or less.

### <Coumarone resin>

The rubber composition according to the present embodiment may further contain coumarone resin (component (D)). Containing the rubber composition in a coumarone resin can improve the loss coefficient tan δ in a high temperature region, which will be described later, and can suppress deterioration of temperature dependence based on the loss coefficient tan δ.

Examples of the coumarone resin include commercially available products such as "Knit Resin Coumarone G-90" manufactured by Nitto Chemical Co., Ltd. The coumarone resin may be used singly, or may be used in combination of two or more.

The content of the coumarone resin is preferably 3 parts by weight or more, more preferably 5 parts by weight or more, and still more preferably 7 parts by weight or more with respect to 100 parts by weight of the rubber component. In addition, the upper limit of the content of the coumarone resin is preferably 50 parts by weight or less, more preferably 25 parts by weight or less, still more preferably 15 parts by weight or less with respect to 100 parts by weight of rubber components. That is, when the rubber composition contains the coumarone resin, the content of the coumarone resin (component (D)) is preferably 3 parts by weight or more and 50 parts by weight or less with respect to 100 parts by weight of the rubber component (component (A)).

### <Crosslinking agent>

The rubber composition may further contain at least one crosslinking agent for forming crosslinks of the rubber components. As the crosslinking agent, it is preferable to use an organic peroxide as a peroxide-based crosslinking agent, and an organic peroxide and sulfur as a sulfur-based crosslinking agent may be used in combination.

Examples of the organic peroxide include dialkyl peroxides, peroxyketals, diacyl peroxides, and peroxy esters. Specific examples thereof include tert-butyl peroxide, dicumyl peroxide, 2,5-dimethyl-2,5-bis(tert-butylperoxy)hexane, 2,5-dimethyl-2,5-bis(tert-butylperoxy)-3-hexyne, tert-butylcumyl peroxide, 1,3-bis(tert-butylperoxyisopropyl)benzene, 2,5-dimethyl-2,5-di(benzoylperoxy)hexane, tert-butylperoxybenzoate, tert-butylperoxyisopropyl carbonate, and n-butyl-4,4-bis(tert-butylperoxy)valerate. These organic peroxides may be used singly or in combination of two or more.

The amount of organic peroxide blended is preferably 0.5 parts by weight or more, more preferably 1 part by weight or more, with respect to 100 parts by weight of rubber components. In addition, the upper limit of the amount of organic peroxide blended is preferably 10 parts by weight or less, more preferably 4 parts by weight or less. The amount of the organic peroxide blended is preferably in the range of 0.5 parts by weight or more and 10 parts by weight or less, more preferably in the range of 1 part by weight or more and 4 parts by weight or less, thereby allowing to prevent the rubber composition from expanding during vulcanization and becoming unable to be vulcanization molded, and in addition, the crosslinking density is improved, and thus it becomes easier to produce an anti-vibration member that exhibits sufficient physical properties after vulcanization molding.

As commercially available organic peroxides, for example, "PERKADOX (trademark registered) 14S-FL" manufactured by Kayaku Akzo Co., Ltd., and "PERCUMYL (registered trademark) D" manufactured by NOF Corporation can be used.

The amount of sulfur as a sulfur-based crosslinking agent is preferably 0.1 parts by weight or more, more preferably 0.2 parts by weight or more, with respect to 100 parts by weight of rubber components. In addition, the upper limit of the amount of sulfur blended is preferably 10 parts by weight or less, more preferably 3 parts by weight or less, and still more preferably 1 part by weight or less. The amount of sulfur blended is preferably in the range of 0.1 parts by weight or more and 10 parts by weight or less, more preferably in the range of 0.1 parts by weight or more and 3 parts by weight or less, still more preferably in the range of 0.2 parts by weight or more and 1 part by weight or less, thereby allowing to prevent the rubber composition from expanding during vulcanization and becoming unable to be vulcanization molded, and in addition, the crosslinking density is improved, and thus it becomes easier to produce an anti-vibration member that exhibits sufficient physical properties after vulcanization molding. Sulfur crosslinking agents may be used singly or in combination of two or more.

As commercially available sulfur products, for example, "Colloidal sulfur A" manufactured by Tsurumi Chemical Industry Co., Ltd., and "Fine Sulfur S325 Mesh" manufactured by Hosoi Chemical Industry Co., Ltd. can be used.

### <Crosslinking accelerator>

The rubber composition according to the present embodiment may further contain a crosslinking accelerator, if necessary. As the crosslinking accelerator, there can be used: sulfur-based crosslinking accelerators such as N-cyclohexyl-2-benzothiazolesulfenamide, N-tert-butyl-2-benzothiazolesulfenamide, N-oxyethylene-2-benzothiazolesulfenamide, N-oxyethylene-2-benzothiazolesulfenamide amide, and N,N'-diisopropyl-2-benzothiazolesulfenamide; guanidine-based crosslinking accelerators such as diphenylguanidine, diorthotolylguanidine, and orthotolyl biguanidine; thiourea-based crosslinking accelerators such as thiocarboanilide, di-orthotolylthiourea, ethylenethiourea, diethylthiourea, and trimethylthiourea; thiazole crosslinking accelerators such as 2-mercaptobenzothiazole, dibenzothiazyl disulfide, 2-mercaptobenzothiazole zinc salt, 2-mercaptobenzothiazole sodium salt, 2-mercaptobenzothiazole cyclohexylamine salt, and 2-(2,4-dinitrophenylthio)benzothiazole; and thiuram-based crosslinking accelerators such as tetramethylthiuram monosulfide, tetramethylthiuram disulfide, tetraethylthiuram disulfide, tetrabutylthiuram disulfide, and dipentamethylenethiuram tetrasulfide. Among these, the sulfur-based crosslinking accelerator is preferable. These crosslinking accelerators may be used singly or may be used in combination of two or more. In addition, when a sulfur-based crosslinking agent is used as a crosslinking agent, a sulfur-based crosslinking accelerator, which is a similar sulfur-based material, may be used in combination.

The amount of the crosslinking accelerator is preferably 0.1 part by weight or more, more preferably 0.3 part by weight or more, with respect to 100 parts by weight of rubber components. In addition, the upper limit of the amount of the crosslinking accelerator blended is preferably 10 parts by weight or less, more preferably 5 parts by weight or less, and still more preferably 2 parts by weight or less. The amount of the crosslinking accelerator blended is preferably in the range of 0.1 parts by weight or more and 10 parts by weight or less, more preferably in the range of 0.1 parts by weight or more and 5 parts by weight or less, and still more preferably in the range of 0.3 parts by weight or more and 2 parts by weight or less, thereby allowing to improve crosslinking efficiency, further improve heat resistance and mechanical properties, and improve the stability of the anti-vibration member after vulcanization molding.

As commercially available crosslinking accelerators, for example, "Noxeler (registered trademark) CZ-G" and "Nocceller (trademark registered) MSA-G" manufactured by Ouchi Shinko Chemical Industry Co., Ltd. can be used.

### <Other additives>

The rubber composition according to the present embodiment can contain various additives that are generally blended into rubber, as necessary. Examples of such additives include fillers, processing aids, anti-aging agents, resins, and co-crosslinking agents. The amount of these additives blended is not particularly limited as long as it does not impair the purpose or effect of the present invention, and the amount can be appropriately blended depending on the purpose of blending.

### <Method for producing rubber composition>

The method for producing the rubber composition according to the present embodiment is not particularly limited, and for example, the above-described rubber component, a cross-linking agent and crosslinking accelerator, at least one of the above-described components (B) to (D), which are blended as necessary, and any various additives are appropriately blended in a predetermined ratio, and then kneaded by using, for example, a kneading machine such as a single-screw extruder, a twin-screw extruder, a roll, a Banbury mixer, a kneader, or a high-shear mixer to allow production of a rubber composition. In addition, before kneading, preliminary kneading may be performed as necessary.

Vulcanization molding of the rubber composition according to the present embodiment can produce a vulcanized molded product such as an anti-vibration member. Vulcanization molding of the rubber composition is generally performed by pressure vulcanization with an injection molding machine, compression molding machine, and the like at about 150 to 230°C for about 0.5 to 30 minutes, for example, 1.5 times the 90% crosslinking time. In addition, after performing such primary vulcanization (pressure vulcanization), secondary vulcanization may be performed as necessary to ensure that the inside of the vulcanized product is vulcanized. Secondary vulcanization can generally be performed by heating in an oven at about 150 to 250°C for about 0.5 to 24 hours.

In the rubber composition according to the present embodiment, the ratio of the storage elastic modulus E' at -30°C to the storage elastic modulus E' at 90°C after crosslinking (-30°C/90°C) is preferably 6.4 or less, preferably 5.7 or less, and more preferably 5.2 or less, as measured with reference to JIS K6394: 2007. The ratio of the storage elastic modulus E' (-30°C/90°C) is 6.4 or less, and thus it is possible to produce an anti-vibration member that exhibits excellent temperature dependence of E' even at various environmental temperatures.

In the rubber composition according to the present embodiment, the ratio of the maximum value of the loss coefficient tan δ to the minimum value of the loss coefficient tan δ at -30°C or more and 90°C or less after crosslinking (-30°C or more and 90°C or less) is preferably 7.2 or less, more preferably 3.6 or less, and particularly preferably 1.5 or less, as measured with reference to JIS K6394: 2007. Setting the ratio of the maximum value of the loss coefficient tan δ to the minimum value of the loss coefficient tan δ to be 7.2 or less can produce an anti-vibration member that can sufficiently exhibit the anti-vibration effect even at various environmental temperatures.

In the rubber composition according to the present embodiment, the hardness (Hs) after crosslinking is preferably 90 or less, more preferably 70 or less, still more preferably 60 or less, and still furthermore preferably 50 or less for JIS A hardness, as measured with reference to JIS K6253: 2012. In addition, the lower limit of JIS A hardness is preferably 15 or more, more preferably 20 or more, still more preferably 25 or more, and still furthermore preferably 30 or more.

In the rubber composition according to the present embodiment, the tensile strength after crosslinking, measured in accordance with JIS K6251: 2017, is preferably 1.0 MPa or more, more preferably 2.0 MPa or more, still more preferably 2.5 MPa or more, and still furthermore preferably 3.0 MPa or more.

In the rubber composition according to the present embodiment, the elongation after crosslinking, measured in accordance with JIS K6251: 2017, is preferably 140% or more, more preferably 250% or more, still more preferably 300% or more, and still furthermore preferably 350% or more.

The rubber composition according to the present embodiment exhibits good temperature dependence of E' after crosslinking, and has excellent mechanical strength and durability, and thus for example is suitable as a rubber material for the anti-vibration member. When producing anti-vibration rubber products with such anti-vibration members, the use for the anti-vibration mount and anti-vibration grommet is suitable as anti-vibration rubber products that require sufficient anti-vibration effects even in various environmental temperatures ranging from high to low temperatures.

The embodiments of the present invention have been described above, and the present invention is not limited to the above-described embodiments, and includes all aspects included within the concept of the present invention and the scope of the claims, and can be variously modified within the scope of the present invention.

Based on the above embodiments, the present invention relates to the following [1] to [18].
[1] An anti-vibration rubber composition characterized in that a ratio of storage elastic modulus E' at -30°C to storage elastic modulus E' at 90°C after crosslinking (-30°C/90°C) is 6.4 or less, as measured with reference to JIS K6394: 2007.
[2] The anti-vibration rubber composition according to [1], wherein a ratio of a maximum value of loss coefficient tan δ to a minimum value of loss coefficient tan δ at -30°C or more and 90°C or less after crosslinking (-30°C or more and 90 or less) is 7.2 or less, as measured with reference to JIS K6394: 2007.
[3] The anti-vibration rubber composition according to [1] or [2], wherein a hardness after crosslinking (Hs) is 90 or less for JIS A hardness, as measured with reference to JIS K6253: 2012.
[4] The anti-vibration rubber composition according to any one of [1] to [3], comprising an ethylene-propylene-diene terpolymer and butadiene rubber as a rubber component (component (A)), wherein
   a content of the ethylene-propylene-diene terpolymer is 12% by weight or more and 98% by weight or less, and a content of the butadiene rubber is 2% by weight or more and 88% by weight or less, with respect to a total amount of the ethylene-propylene-diene terpolymer and butadiene rubber.
[5] The anti-vibration rubber composition according to [4], wherein a content of the ethylene-propylene-diene terpolymer is 18% by weight or more and 88% by weight or less.
[6] The anti-vibration rubber composition according to [5], wherein a content of the ethylene-propylene-diene terpolymer is 24% by weight or more and 80% by weight or less.
[7] The anti-vibration rubber composition according to any one of [4] to [6], further comprising at least one of carbon black (component (B)) and a plasticizer (component (C)).
[8] The anti-vibration rubber composition according to [7], wherein the plasticizer is a poly α-olefin.
[9] The anti-vibration rubber composition according to [7] or [8], including the component (B), wherein
   a content of the component (B) is 10 parts by weight or more and 250 parts by weight or less with respect to 100 parts by weight of the component (A).
[10] The anti-vibration rubber composition according to any one of [7] to [9], including the component (C), wherein
   a content of the component (C) is 10 parts by weight or more and 200 parts by weight or less with respect to 100 parts by weight of the component (A).
[11] The anti-vibration rubber composition according to any one of [7] to [10], including the component (B) and the component (C), wherein
   with respect to a total amount of the component (A), the component (B), and the component (C),
   a content of the component (A) is 20% by weight or more and 80% by weight or less,
   a content of the component (B) is 10% by weight or more and 60% by weight or less, and
   a content of the component (C) is 10% by weight or more and 50% by weight or less.
[12] The anti-vibration rubber composition according to any one of [4] to [11], further comprising coumarone resin (component D).
[13] The anti-vibration rubber composition according to [12], wherein a content of the component (D) is 3 parts by weight or more and 50 parts by weight or less with respect to 100 parts by weight of the component (A).
[14] The anti-vibration rubber composition according to any one of [4] to [13], comprising an organic peroxide as a crosslinking agent.
[15] The anti-vibration rubber composition according to [14], wherein the crosslinking agent further contains sulfur.
[16] The anti-vibration rubber composition according to [14] or [15], further comprising a sulfur-based crosslinking accelerator.
[17] An anti-vibration mount obtained by vulcanization molding the anti-vibration rubber composition according to any one of [1] to [16].
[18] An anti-vibration grommet obtained by vulcanization molding the anti-vibration rubber composition according to any one of [1] to [16].

### [Examples]

Examples of the present invention will be described below, but the present invention is not limited to these examples unless it exceeds the spirit thereof.

The materials used in Examples and Comparative Examples are as follows.
· EPDM: Ethylene-propylene-diene terpolymer (trade name "JSR EP27", manufactured by JSR Corporation)
· BR: Butadiene rubber (trade name "UBEPOL BR (registered trademark) 150", manufactured by Ube Industries, Ltd.)
· SBR: Styrene-butadiene copolymer (trade name "NIPOL (registered trademark) NS612", manufactured by Nippon Zeon Co., Ltd.)
· Carbon black A: HAF-LS carbon black (trade name "REGAL (registered trademark) 300J", manufactured by Cabot Japan K.K.)
· Carbon black B: Acetylene black (trade name "Denka Black (registered trademark) granules", manufactured by Denka Corporation)
· Carbon black C: MCF carbon black (trade name "Toka Black (registered trademark) #8300", manufactured by Tokai Carbon Co., Ltd.)
· Plasticizer A: Poly α-olefin (trade name "DURASYN (registered trademark) 164", manufactured by INEOS Capital Limited)
· Plasticizer B: Poly α-olefin (trade name "DURASYN (registered trademark) 170", manufactured by INEOS Capital Limited)
· Plasticizer C: Poly α-olefin (trade name "DURASYN (registered trademark) 174I", manufactured by INEOS Capital Limited)
· Coumarone resin: Coumarone resin (trade name: "Knit Resin Coumarone G-90", manufactured by Nitto Chemical Co., Ltd.)
· Crosslinking agent A: Sulfur (trade name "Colloidal Sulfur A", manufactured by Tsurumi Chemical Industry Co., Ltd.)
· Crosslinking agent B: di(tert-butylperoxyisopropyl)benzene (trade name "PERKADOX (registered trademark) 14S-FL", manufactured by Kayaku Akzo Co., Ltd.)
· Crosslinking accelerator: N-cyclohexyl-2-benzothiazolylsulfenamide (trade name "Noxela (registered trademark) CZ-G", manufactured by Ouchi Shinko Kagaku Kogyo Co., Ltd.)

The values for each of the above materials in Tables 1 to 5 below represent "parts by weight."

### (Example 1)

EPDM (trade name "JSR EP27", manufactured by JSR Corporation) of 98 parts by weight, 2 parts by weight of BR (trade name "UBEPOL BR (registered trademark) 150", manufactured by Ube Industries, Ltd.), 140 parts by weight of carbon black A (HAF-LS: trade name "REGAL (registered trademark) 300J", manufactured by Cabot Japan K.K.), 100 parts by weight of plasticizer A (poly α-olefin: trade name "DURASYN (registered trademark) 164", manufactured by INEOS Capital Ltd.), 0.4 parts by weight of crosslinking agent A (sulfur: trade name "Colloidal Sulfur A", manufactured by Tsurumi Chemical Industry Co., Ltd.), 1.1 parts by weight of crosslinking agent B (di(tert-butylperoxyisopropyl)benzene: trade name "PERKADOX (registered trademark) 14S-FL", manufactured by Kayaku Akzo Co., Ltd.), 8 parts by weight of coumarone resin (trade name: "Knit Resin Coumaron G-90", manufactured by Nitto Chemical Co., Ltd.), and 1.0 parts by weight of a crosslinking accelerator (N-cyclohexyl-2-benzothiazolylsulfenamide: trade name "Noxela (registered trademark) CZ-G", manufactured by Ouchi Shinko Kagaku Kogyo Co., Ltd.) were kneaded by using a kneader and an open roll kneader to prepare a rubber composition.

### <Preparation of test piece for measuring properties>

The obtained rubber composition was crosslinked by using a sheet mold with a hot press at 180°C, subjected to pressure vulcanization (primary vulcanization) by crosslinking for a time 1.5 times t90 (90% crosslinking time) to prepare a 2 mm thick crosslinked rubber sheet.

### <Vibration properties>

A rectangular crosslinked rubber sheet with a width of 6 mm and a thickness of 2 mm was prepared as a test piece. For the test piece of the crosslinked rubber sheet prepared, the loss coefficient tan δ and storage elastic modulus E' were measured under the following test conditions with reference to JIS K6394: 2007 with "viscoelasticity measuring device DVE-V4" of UBM. The results are shown in Table 1.

### [Test condition]

· Gripper spacing: 20 mm
· Average distortion: 10%
· Distortion amplitude: ±1.0%
· Frequency: 100 Hz
· Test temperature: -30°C to 120°C

As an index of the temperature dependence of E', the ratio of the storage elastic modulus E' at -30°C to the storage elastic modulus E' at 90°C (-30°C/90°C) was used as a criterion. If the ratio of storage elastic modulus E' (-30°C/90°C) was 5.2 or less, it was considered to be significantly excellent in the temperature dependence of E' and evaluated as "Excellent"; if more than 5.2 and 5.7 or less, considered to be excellent in the temperature dependence of E' and evaluated as "Good"; if more than 5.7 and 6.4 or less, considered to be good in the temperature dependence of E' and evaluated as "Fair"; and if more than 6.4, considered to be poor in the temperature dependence of E' and evaluated as "Poor". The results are shown in Table 1.

The loss coefficient tan δ at 70°C was measured as an index of anti-vibration properties in a high temperature region. The results are shown in Table 1.

### <Normal properties>

The following normal physical properties of the obtained crosslinked rubber sheet were evaluated.

Hardness Hs: The peak value of hardness was measured using a type A durometer with reference to JIS K6253: 2012.

Tensile strength Ts (MPa): Measured in accordance with JIS K6251: 2017.
Elongation Eb (%): Measured in accordance with JIS K6251: 2017

### (Example 2)

A rubber composition and a crosslinked rubber sheet were prepared in the same manner as in Example 1, except that the amount of EPDM blended was 90 parts by weight and the amount of BR blended was 10 parts by weight, and the above measurements and evaluations were performed. The results are shown in Table 1.

### (Example 3)

A rubber composition and a crosslinked rubber sheet were prepared in the same manner as in Example 1, except that the amount of EPDM blended was 88 parts by weight and the amount of BR blended was 12 parts by weight, and the above measurements and evaluations were performed. The results are shown in Table 1.

### (Example 4)

A rubber composition and a crosslinked rubber sheet were prepared in the same manner as in Example 1, except that the amount of EPDM blended was 80 parts by weight and the amount of BR blended was 20 parts by weight, and the above measurements and evaluations were performed. The results are shown in Table 1.

### (Example 5)

A rubber composition and a crosslinked rubber sheet were prepared in the same manner as in Example 1, except that the amount of EPDM blended was 50 parts by weight and the amount of BR blended was 50 parts by weight, and the above measurements and evaluations were performed. The results are shown in Table 1.

### (Example 6)

A rubber composition and a crosslinked rubber sheet were prepared in the same manner as in Example 1, except that the amount of EPDM blended was 35 parts by weight and the amount of BR blended was 65 parts by weight, and the above measurements and evaluations were performed. The results are shown in Table 1.

### (Example 7)

A rubber composition and a crosslinked rubber sheet were prepared in the same manner as in Example 1, except that the amount of EPDM blended was 24 parts by weight and the amount of BR blended was 76 parts by weight, and the above measurements and evaluations were performed. The results are shown in Table 1.

### (Example 8)

A rubber composition and a crosslinked rubber sheet were prepared in the same manner as in Example 1, except that the amount of EPDM blended was 20 parts by weight and the amount of BR blended was 80 parts by weight, and the above measurements and evaluations were performed. The results are shown in Table 1.

### (Example 9)

A rubber composition and a crosslinked rubber sheet were prepared in the same manner as in Example 1, except that the amount of EPDM blended was 18 parts by weight and the amount of BR blended was 82 parts by weight, and the above measurements and evaluations were performed. The results are shown in Table 1.

### (Example 10)

A rubber composition and a crosslinked rubber sheet were prepared in the same manner as in Example 1, except that the amount of EPDM blended was 12 parts by weight and the amount of BR blended was 88 parts by weight, and the above measurements and evaluations were performed. The results are shown in Table 1.

### (Comparative Example 1)

A rubber composition and a crosslinked rubber sheet were prepared in the same manner as in Example 1, except that the amount of EPDM blended was 100 parts by weight and BR was not included (0 parts by weight), and the above measurements and evaluations were performed. The results are shown in Table 2.

### (Comparative Example 2)

A rubber composition and a crosslinked rubber sheet were prepared in the same manner as in Example 1, except that the amount of EPDM blended was 99 parts by weight and the amount of BR blended was 1 part by weight, and the above measurements and evaluations were performed. The results are shown in Table 2.

### (Comparative Example 3)

A rubber composition and a crosslinked rubber sheet were prepared in the same manner as in Example 1, except that the amount of EPDM blended was 11 parts by weight and the amount of BR blended was 89 parts by weight, and the above measurements and evaluations were performed. The results are shown in Table 2.

### (Comparative Example 4)

A rubber composition and a crosslinked rubber sheet were prepared in the same manner as in Example 1, except that the amount of BR blended was 100 parts by weight and EPDM was not included (0 parts by weight), and the above measurements and evaluations were performed. The results are shown in Table 2.

### (Comparative Example 5)

A rubber composition and a crosslinked rubber sheet were prepared in the same manner as in Example 1, except that the amount of EPDM blended was 50 parts by weight and the amount of SBR blended was 50 parts by weight in place of BR, and the above measurements and evaluations were performed. The results are shown in Table 2.

**[Table 1]**

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Rubber composition | EPDM | 98 | 90 | 88 | 80 | 50 | 35 | 24 | 20 | 18 | 12 |
| | BR | 2 | 10 | 12 | 20 | 50 | 65 | 76 | 80 | 82 | 88 |
| | SBR | | | | | | | | | | |
| | Carbon black A | 140 | 140 | 140 | 140 | 140 | 140 | 140 | 140 | 140 | 140 |
| | Plasticizer A | 100 | 100 | 100 | 100 | 100 | 100 | 100 | 100 | 100 | 100 |
| | Crosslinking agent A | 0.4 | 0.4 | 0.4 | 0.4 | 0.4 | 0.4 | 0.4 | 0.4 | 0.4 | 0.4 |
| | Crosslinking agent B | 1.1 | 1.1 | 1.1 | 1.1 | 1.1 | 1.1 | 1.1 | 1.1 | 1.1 | 1.1 |
| | Coumarone resin | 8 | 8 | 8 | 8 | 8 | 8 | 8 | 8 | 8 | 8 |
| | Crosslinking accelerator | 1.0 | 1.0 | 1.0 | 10 | 10 | 1.0 | 1.0 | 1.0 | 1.0 | 1.0 |
| Value of normal properties | Hardness Hs [-] | 58 | 56 | 56 | 55 | 49 | 49 | 47 | 47 | 47 | 46 |
| | Tensile strength Ts {MPa} | 4.5 | 4.2 | 4.1 | 3.9 | 3.5 | 4.9 | 5.3 | 5.6 | 5.8 | 6.3 |
| | Elongation Eb [%] | 800 | 710 | 680 | 610 | 400 | 410 | 390 | 400 | 400 | 420 |
| Vibration properties | Ratio of storage elastic modulus E' (-30°C/90°C) | Fair (6.38) | Fair (5.81) | Good (5.68) | Excellent (5.19) | Excellent (4.35) | Excellent (4.73) | Excellent (5.16) | Good (5.48) | Good (5.66) | Fair (630) |
| | Loss coefficient tan δ (70°C) | 0.38 | 0.38 | 0.38 | 0.38 | 0.37 | 0.35 | 0.35 | 0.34 | 0.34 | 0.33 |

**[Table 2]**

| | | Comparative Example 1 | Comparative Example 2 | Comparative Example 3 | Comparative Example 4 | Comparative Example 5 |
|---|---|---|---|---|---|---|
| Rubber composition | EPDM | 100 | 99 | 11 | | 50 |
| | BR | | 1 | 89 | 100 | |
| | SBR | | | | | 50 |
| | Carbon black A | 140 | 140 | 140 | 140 | 140 |
| | Plasticizer A | 100 | 100 | 100 | 100 | 100 |
| | Crosslinking agent A | 0.4 | 0.4 | 0.4 | 0.4 | 0.4 |
| | Crosslinking agent B | 1.1 | 1.1 | 1.1 | 1.1 | 1.1 |
| | Coumarone resin | 8 | 8 | 8 | 8 | 8 |
| | Crosslinking accelerator | 1.0 | 1.0 | 1.0 | 1.0 | 1.0 |
| Value of normal properties | Hardness Hs [-] | 58 | 58 | 46 | 45 | 56 |
| | Tensile strength Ts {MPa} | 4.6 | 4.5 | 6.4 | 6.9 | 3.4 |
| | Elongation Eb [%] | 820 | 810 | 420 | 470 | 370 |
| Vibration properties | Ratio of storage elastic modulus E' (-30°C/90°C) | Poor (6.53) | Poor (6.45) | Poor (6.42) | Poor (8.61) | Poor (7.63) |
| | Loss coefficient tan δ (70°C) | 0.38 | 0.38 | 0.33 | 0.31 | 0.39 |

As found from Table 1, in Examples 1 to 10 in which both EPDM and BR were included as rubber components, the content of EPDM is 12% by weight or more and 98% by weight or less, and the content of BR is 2% by weight or more and 88% by weight or less with respect to the total amount of EPDM and BR, all of the ratio of storage elastic modulus E' (-30°C/90°C) was 6.4 or less, indicating good temperature dependence of E'. In Examples 3 and 8 to 9 in which the ratio of storage elastic modulus E' (-30°C/90°C) is more than 5.2 and 5.7 or less, the temperature dependence of E' was further improved, and particularly, in Examples 4 to 7 in which the ratio of storage elastic modulus E' (-30°C/90°C) was 5.2 or less, the temperature dependence of E' was significantly good.

On the other hand, as shown in Table 2, in Comparative example 1 in which EPDM was included singly as a rubber component and BR was not included, in Comparative Examples 2 and 3 in which both EPDM and BR were included as rubber components, but the content of EPDM with respect to the total amount of EPDM and BR was outside the range of 12% by weight or more and 98% by weight or less, and in Comparative example 4 in which BR was included singly as a rubber component and EPDM was not included, and in Comparative Example 5 in which EPDM and SBR were included instead of EPDM and BR as rubber components, all of the ratio of storage elastic modulus E' (-30°C/90°C) was more than 6.4, and the desired temperature dependence of E' was not exhibited.

### (Example 11)

Using the rubber composition and crosslinked rubber sheet prepared in Example 5, the following vibration properties were evaluated in addition to the normal properties and the ratio of the storage elastic modulus E' (-30°C/90°C).

The loss coefficient tan δ at 70°C was measured as an index of anti-vibration properties in a high temperature region. The results are shown in Table 3.

As another index of anti-vibration properties, the ratio of the maximum value of the loss coefficient tan δ to the minimum value of the loss coefficient tan δ in the temperature range of -30°C or more and 90°C or less (-30°C to 90°C) was used as a criterion. If the ratio of loss coefficient tan δ (-30°C to 90°C) is 1.5 or less, the anti-vibration effect was considered to be significantly excellent, and evaluated as "Excellent", if more than 1.5 and 3.6 or less, the anti-vibration effect was considered to be excellent and evaluated as "Good", if more than 3.6 and 7.2 or less, the anti-vibration effect was considered to be good and evaluated as "Fair". The results are shown in Tables 3 to 5.

### (Example 12)

A rubber composition and a crosslinked rubber sheet were prepared in the same manner as in Example 11, except that the amount of carbon black A blended was 70 parts by weight, and the above measurements and evaluations were performed. The results are shown in Table 3.

### (Example 13)

A rubber composition and a crosslinked rubber sheet were prepared in the same manner as in Example 11, except that the amount of carbon black A blended was 200 parts by weight, and the above measurements and evaluations were performed. The results are shown in Table 3.

### (Example 14)

A rubber composition and a crosslinked rubber sheet were prepared in the same manner as in Example 11, except that carbon black A and plasticizer A were not included (0 parts by weight), and the above measurements and evaluations were performed. The results are shown in Table 3.

### (Example 15)

A rubber composition and a crosslinked rubber sheet were prepared in the same manner as in Example 11, except that the amount of carbon black A blended was 50 parts by weight and the plasticizer A was not included (0 parts by weight), and the above measurements and evaluations were performed. The results are shown in Table 3.

### (Example 16)

A rubber composition and a crosslinked rubber sheet were prepared in the same manner as in Example 11, except that the amount of carbon black A blended was 100 parts by weight and the plasticizer A was not included (0 parts by weight), and the above measurements and evaluations were performed. The results are shown in Table 3.

### (Example 17)

A rubber composition and a crosslinked rubber sheet were prepared in the same manner as in Example 11, except that carbon black A was not included (0 parts by weight) and the amount of plasticizer A blended was 25 parts by weight, and the above measurements and evaluations were performed. The results are shown in Table 3.

### (Example 18)

A rubber composition and a crosslinked rubber sheet were prepared in the same manner as in Example 11, except that the amount of carbon black A blended was 60 parts by weight and the amount of plasticizer A blended was 50 parts by weight, and the above measurements and evaluations were performed. The results are shown in Table 3.

### (Example 19)

A rubber composition and a crosslinked rubber sheet were prepared in the same manner as in Example 11, except that the amount of carbon black A blended was 200 parts by weight and the amount of plasticizer A blended was 50 parts by weight, and the above measurements and evaluations were performed. The results are shown in Table 3.

### (Example 20)

A rubber composition and a crosslinked rubber sheet were prepared in the same manner as in Example 11, except that the amount of carbon black A blended was 40 parts by weight and the amount of plasticizer A blended was 40 parts by weight, and the above measurements and evaluations were performed. The results are shown in Table 3.

### (Example 21)

A rubber composition and a crosslinked rubber sheet were prepared in the same manner as in Example 11, except that the amount of carbon black A blended was 20 parts by weight and the amount of plasticizer A blended was 20 parts by weight, and the above measurements and evaluations were performed. The results are shown in Table 3.

### (Example 22)

A rubber composition and a crosslinked rubber sheet were prepared in the same manner as in Example 11, except that the amount of carbon black A blended was 30 parts by weight, and the above measurements and evaluations were performed. The results are shown in Table 3.

### (Example 23)

A rubber composition and a crosslinked rubber sheet were prepared in the same manner as in Example 11, except that the amount of plasticizer A blended was 150 parts by weight, and the above measurements and evaluations were performed. The results are shown in Table 3.

**[Table 3]**

| | | Example 11 | Example 12 | Example 13 | Example 14 | Example 15 | Example 16 | Example 17 | Example 18 | Example 19 | Example 20 | Example 21 | Example 22 | Example 23 |
|---|---|---|---|---|---|---|---|---|---|---|---|---|---|---|
| Rubber composition | EPDM | 50 | 50 | 50 | 50 | 50 | 50 | 50 | 50 | 50 | 50 | 50 | 50 | 50 |
| | BR | 50 | 50 | 50 | 50 | 50 | 50 | 50 | 50 | 50 | 50 | 50 | 50 | 50 |
| | SBR | | | | | | | | | | | | | |
| | Carbon black A | 140 | 70 | 200 | 0 | 50 | 100 | 0 | 60 | 200 | 40 | 20 | 30 | 140 |
| | Plasticizer A | 100 | 100 | 100 | 0 | 0 | 0 | 25 | 50 | 50 | 40 | 20 | 100 | 150 |
| | Crosslinking agent A | 0.4 | 0.4 | 0.4 | 0.4 | 0.4 | 0.4 | 0.4 | 0.4 | 0.4 | 0.4 | 0.4 | 0.4 | 0.4 |
| | Crosslin king agent B | 1.1 | 1.1 | 1.1 | 1.1 | 1.1 | 1.1 | 1.1 | 1.1 | 1.1 | 1.1 | 1.1 | 1.1 | 1.1 |
| | Coumarone resin | 8 | 8 | 8 | 8 | 8 | 8 | 8 | 8 | 8 | 8 | 8 | 8 | 8 |
| | Crosslinking accelerator | 1.0 | 1.0 | 1.0 | 1.0 | 1.0 | 1.0 | 10 | 1.0 | 1.0 | 10 | 1.0 | 1.0 | 10 |
| Value of normal properties | Hardness Hs [-] | 49 | 29 | 69 | 47 | 67 | 84 | 35 | 27 | 88 | 29 | 37 | 16 | 66 |
| | Tensile strength Ts {MPa} | 3.5 | 2.3 | 3.6 | 3.7 | 17.8 | 16.7 | 2.7 | 1.0 | 5.7 | 1.0 | 1.3 | 1.1 | 4.0 |
| | Elongation Eb [%] | 400 | 500 | 260 | 600 | 550 | 270 | 690 | 530 | 450 | 400 | 450 | 590 | 280 |
| Vibration properties | Loss coefficient tan δ (70°C) | 0.37 | 0.25 | 0.43 | 0.09 | 0.18 | 0.28 | 0.12 | 0.15 | 0.36 | 0.13 | 0.11 | 0.16 | 0.28 |
| | Minimum value of loss coefficient tan δ (-30°C to 90°C) | 0.34 | 0.22 | 0.38 | 0.08 | 0.17 | 0.27 | 0.10 | 0.12 | 0.35 | 0.11 | 0.10 | 0.11 | 0.27 |
| | Ratio of loss coefficient tan δ (maximum value/minimum value at -30°C to 90°C) | Excellent (1.11) | Excellent (1.18) | Excellent (114) | Fair (7.09) | Good (2.86) | Good (1.54) | Good (2.82) | Good (2.00) | Excellent (1.13) | Good (2.38) | Good (3.57) | Excellent (1.27) | Excellent (1.44) |
| | Ratio of storage elastic modulus E' (-30°C/90°C) | Excellent (4.35) | Excellent (322) | Good (5.66) | Excellent (168) | Excellent (3.21) | Excellent (2.95) | Excellent (1.39) | Excellent (1.45) | Excellent (414) | Excellent (1.47) | Excellent (1.49) | Excellent (2.76) | Excellent (3.18) |

As found from Table 3, the rubber composition included at least one of carbon black and a plasticizer, whereby the ratio of loss coefficient tan δ (-30°C to 90°C) was significantly lowered, and both exhibited excellent anti-vibration properties. Particularly, in Examples 11 to 13, 19, and 22 to 23, all of the loss coefficient tan δ ratio (-30°C to 90°C) was 1.5 or less, and exhibited significantly excellent anti-vibration properties.

### (Example 24)

A rubber composition and a crosslinked rubber sheet were prepared in the same manner as in Example 11, except that a carbon black B was used instead of carbon black A, and the above measurements and evaluations were performed. The results are shown in Table 4.

### (Example 25)

A rubber composition and a crosslinked rubber sheet were prepared in the same manner as in Example 11, except that a carbon black C was used instead of carbon black A, and the above measurements and evaluations were performed. The results are shown in Table 4.

### (Example 26)

A rubber composition and a crosslinked rubber sheet were prepared in the same manner as in Example 11, except that a plasticizer B was used instead of the plasticizer A, and the above measurements and evaluations were performed. The results are shown in Table 4.

### (Example 27)

A rubber composition and a crosslinked rubber sheet were prepared in the same manner as in Example 11, except that a plasticizer C was used instead of the plasticizer A, and the above measurements and evaluations were performed. The results are shown in Table 4.

### (Example 28)

A rubber composition and a crosslinked rubber sheet were prepared in the same manner as in Example 11, except that coumarone resin was not included (0 parts by weight), and the above measurements and evaluations were performed. The results are shown in Table 5.

### (Example 29)

A rubber composition and a crosslinked rubber sheet were prepared in the same manner as in Example 11, except that 7.5 parts by weight of the coumarone resin were blended, and the above measurements and evaluations were performed. The results are shown in Table 5.

### (Example 30)

A rubber composition and a crosslinked rubber sheet were prepared in the same manner as in Example 11, except that 15 parts by weight of the coumarone resin were blended, and the above measurements and evaluations were performed. The results are shown in Table 5.

### (Example 31)

A rubber composition and a crosslinked rubber sheet were prepared in the same manner as in Example 11, except that 22.5 parts by weight of the coumarone resin were blended, and the above measurements and evaluations were performed. The results are shown in Table 5.

**[Table 4]**

| | | Example 11 | Example 24 | Example 25 | Example 26 | Example 27 |
|---|---|---|---|---|---|---|
| Rubber composition | EPDM | 50 | 50 | 50 | 50 | 50 |
| | BR | 50 | 50 | 50 | 50 | 50 |
| | SBR | | | | | |
| | Carbon black A | 140 | | | 140 | 140 |
| | Carbon black B | | 140 | | | |
| | Carbon black C | | | 140 | | |
| | Plasticizer A | 100 | 100 | 100 | | |
| | Plasticizer B | | | | 100 | |
| | Plasticizer C | | | | | 100 |
| | Coumarone resin | 8 | 8 | 8 | 8 | 8 |
| | Crosslinking agent A | 0.4 | 0.4 | 0.4 | 0.4 | 0.4 |
| | Crosslinking agent B | 1.1 | 1.1 | 1.1 | 1.1 | 1.1 |
| | Crosslinking accelerator | 1.0 | 1.0 | 1.0 | 1.0 | 1.0 |
| Value of normal properties | Hardness Hs [-] | 49 | 60 | 55 | 54 | 56 |
| | Tensile strength Ts {MPa} | 3.5 | 4.1 | 3.5 | 4.6 | 30 |
| | Elongation Eb [%] | 400 | 470 | 680 | 400 | 330 |
| Vibration properties | Loss coefficient tan δ (70°C) | 0.37 | 0.30 | 0.35 | 0.39 | 0.40 |
| | Minimum value of loss coefficient tan δ (-30°C to 90°C) | 0.34 | 0.29 | 0.34 | 0.36 | 0.37 |
| | Ratio of loss coefficient tan δ (maximum value/minimum value at -30°C to 90°C) | Excellent (1.11) | Excellent (1.21) | Excellent (1.03) | Excellent (1.16) | Excellent (1.25) |
| | Ratio of storage elastic modulus E' (-30°C/90°C) | Excellent (4.35) | Excellent (4.14) | Excellent (4.37) | Excellent (4.71) | Excellent (4.89) |

**[Table 5]**

| | | Example 11 | Example 28 | Example 29 | Example 30 | Example 31 |
|---|---|---|---|---|---|---|
| Rubber composition | EPDM | 50 | 50 | 50 | 50 | 50 |
| | BR | 50 | 50 | 50 | 50 | 50 |
| | SBR | | | | | |
| | Carbon black A | 140 | 140 | 140 | 140 | 140 |
| | Carbon black B | | | | | |
| | Carbon black C | | | | | |
| | Plasticizer A | 100 | 100 | 100 | 100 | 100 |
| | Plasticizer B | | | | | |
| | Plasticizer C | | | | | |
| | Coumarone resin | 8 | | 7.5 | 15 | 22.5 |
| | Crosslinking agent A | 0.4 | 0.4 | 0.4 | 0.4 | 0.4 |
| | Crosslinking agent B | 1.1 | 1.1 | 1.1 | 1.1 | 1.1 |
| | Crosslinking accelerator | 1.0 | 1.0 | 1.0 | 1.0 | 1.0 |
| Value of normal properties | Hardness Hs [-] | 49 | 47 | 49 | 53 | 55 |
| | Tensile strength Ts {MPa} | 3.5 | 4.4 | 3.5 | 3.0 | 2.6 |
| | Elongation Eb [%] | 400 | 370 | 400 | 430 | 440 |
| Vibration properties | Loss coefficient tan δ (70°C) | 0.37 | 0.29 | 0.37 | 0.41 | 0.42 |
| | Minimum value of loss coefficient tan δ (-30°C to 90°C) | 0.34 | 0.28 | 0.34 | 0.33 | 0.30 |
| | Ratio of loss coefficient tan δ (maximum value/minimum value at -30°C to 90°C) | Excellent (1.11) | Excellent (1.25) | Excellent (1.10) | Excellent (1.25) | Excellent (1.40) |
| | Ratio of storage elastic modulus E' (-30°C/90°C) | Excellent (4.35) | Excellent (3.71) | Excellent (4.34) | Excellent (4.73) | Fair (6.14) |

As found from Table 4, in Examples 11 and 24 to 27, all of the loss coefficient tan δ ratio (-30°C to 90°C) was 1.5 or less, indicating significantly excellent anti-vibration properties regardless of the types of carbon black and plasticizer. In addition, as found from Table 5, adding coumarone resin improved the loss coefficient tan δ in high temperature range, and particularly, in Examples 11, 29, and 30, the content of the coumarone resin is 7 parts by weight or more and 15 parts by weight or less with respect to 100 parts by weight of rubber components, deterioration of the temperature dependence based on the loss coefficient tan δ was possible to be suppressed.

It has been found from the above results that the ratio of the storage elastic modulus E' at -30°C to the storage elastic modulus E' at 90°C after crosslinking (-30°C/90°C) is 6.4 or less, as measured with reference to JIS K6394: 2007, thereby providing a rubber composition that exhibits good temperature dependence of E' after crosslinking and exhibits good vibration properties at various environmental temperatures. Therefore, for example, an anti-vibration member obtained by vulcanization molding of such a rubber composition can also exhibit a good anti-vibration effect, and particularly, when an anti-vibration rubber product is produced by using such an anti-vibration member, the use for an anti-vibration mount or an anti-vibration grommet is suitable.

## Claims

1. An anti-vibration rubber composition **characterized in that** a ratio of storage elastic modulus E' at -30°C to storage elastic modulus E' at 90°C after crosslinking (-30°C/90°C) is 6.4 or less, as measured with reference to JIS K6394: 2007.

2. The anti-vibration rubber composition according to claim 1, wherein a ratio of a maximum value of loss coefficient tan δ to a minimum value of loss coefficient tan δ at -30°C or more and 90°C or less after crosslinking (-30°C or more and 90°C or less) is 7.2 or less, as measured with reference to JIS K6394: 2007.

3. The anti-vibration rubber composition according to claim 1, wherein hardness (Hs) after crosslinking is 90 or less for JIS A hardness, as measured with reference to JIS K6253: 2012.

4. The anti-vibration rubber composition according to any one of claims 1 to 3, comprising an ethylene-propylene-diene terpolymer and butadiene rubber as rubber components (component (A)),
wherein a content of the ethylene-propylene-diene terpolymer is 12% by weight or more and 98% by weight or less, and a content of the butadiene rubber is 2% by weight or more and 88% by weight or less, with respect to a total amount of the ethylene-propylene-diene terpolymer and butadiene rubber.

5. The anti-vibration rubber composition according to claim 4, wherein a content of the ethylene-propylene-diene terpolymer is 18% by weight or more and 88% by weight or less.

6. The anti-vibration rubber composition according to claim 5, wherein a content of the ethylene-propylene-diene terpolymer is 24% by weight or more and 80% by weight or less.

7. The anti-vibration rubber composition according to claim 4, further comprising at least one of carbon black (component (B)) and a plasticizer (component (C)).

8. The anti-vibration rubber composition according to claim 7, wherein the plasticizer is a poly α-olefin.

9. The anti-vibration rubber composition according to claim 7, comprising the component (B), wherein
a content of the component (B) is 10 parts by weight or more and 250 parts by weight or less with respect to 100 parts by weight of the component (A).

10. The anti-vibration rubber composition according to claim 7, comprising the component (C), wherein
a content of the component (C) is 10 parts by weight or more and 200 parts by weight or less with respect to 100 parts by weight of the component (A).

11. The anti-vibration rubber composition according to claim 7, comprising the component (B) and the component (C), wherein
with respect to a total amount of the component (A), the component (B), and the component (C),
a content of the component (A) is 20% by weight or more and 80% by weight or less,
a content of the component (B) is 10% by weight or more and 60% by weight or less, and
a content of the component (C) is 10% by weight or more and 50% by weight or less.

12. The anti-vibration rubber composition according to claim 7, further comprising coumarone resin (component D).

13. The anti-vibration rubber composition according to claim 12, wherein a content of the component (D) is 3 parts by weight or more and 50 parts by weight or less with respect to 100 parts by weight of the component (A).

14. The anti-vibration rubber composition according to claim 4, comprising an organic peroxide as a crosslinking agent.

15. The anti-vibration rubber composition according to claim 14, wherein the crosslinking agent further contains sulfur.

16. The anti-vibration rubber composition according to claim 14, further comprising a sulfur-based crosslinking accelerator.

17. An anti-vibration mount obtained by vulcanization molding the anti-vibration rubber composition according to any one of claims 1 to 3.

18. An anti-vibration grommet obtained by vulcanization molding the anti-vibration rubber composition according to any one of claims 1 to 3.
